# EUROPEAN PATENT APPLICATION

(11) **EP 2 682 216 A2**
(43) Date of publication of application: **08.01.2014**
(21) Application number: 13173531.8
(22) Date of filing: 25.06.2013
(51) Int. Cl.: B23F 21/14, B23F 21/16

(54) **A milling insert and a milling tool**

(30) Priority: 05.07.2012 SE 1250782
(71) Applicant: Sandvik Intellectual Property AB, 811 81 Sandviken (SE)
(72) Inventor: Sågström, Thomas, SE-811 39 Sandviken (SE); Sjöberg, Sören, SE-802 86 Gävle (SE)

(57) **Abstract**

The invention concerns a milling insert (4) and a milling tool (1) for the milling of a slot in a workpiece (2). The milling insert comprises an under side (11), an opposite upper side (12) that forms a chip surface and is parallel to an extension plane, and an edge side (13) between the upper side and the under side. A cutting edge, which extends between the edge side and the chip surface, comprises a primary main cutting edge (15), a secondary main cutting edge (16), and an end cutting edge (17). The end cutting edge (17) connects the primary main cutting edge and the secondary main cutting edge and borders on the primary main cutting edge at a primary transition point (15') and on the secondary main cutting edge at a secondary transition point (16'). A normal to the extension plane of the chip surface forms an acute clearance angle with the edge side along the cutting edge. The end cutting edge is curved from the primary transition point to the secondary transition point.

## Description

### FIELD OF THE INVENTION

The present invention concerns a milling insert of a milling tool formed for the milling of slots in a workpiece. The milling insert is formed for the milling of internal or external tooth slots of gearwheels and spline joints. The milling tool comprises a slitting cutter tool and/or a hob milling tool. More precisely, the present invention concerns a milling insert according to the initial part of claim 1. The invention also concerns a milling tool formed for the milling of a slot in a workpiece.

### BACKGROUND OF THE INVENTION AND PRIOR ART

In the cutting machining of slots in gearwheels, with working teeth, or splines, with non-working teeth, it is, with today's technique, difficult to provide a final shape of the so-called root in the gash between adjacent teeth, i.e., the bottom surface of the gash and the area at the bottom of the gash. Today, the machining of such slots is carried out in several steps where the shape of the root, or final shape is achieved by a subsequent machining step, for instance by grinding in another machine and in another set-up, which thereby imposes requirements on a preceding measurement of the workpiece before the final machining.

US 2008/0206007 shows a milling tool for cutting rough machining by the milling of slots in a turbine disk. Each slot is, after a subsequent final machining, formed to receive and hold a turbine blade in the turbine disk. The milling tool comprises a plurality of milling inserts each one of which comprises an under side, an opposite upper side forming a chip surface, and an edge side between the upper side and the under side. A centre axis extends through the under side and the upper side. A cutting edge extends between the edge side and the chip surface and is formed to be in engagement with the workpiece. The cutting edge comprises a primary main cutting edge, a secondary main cutting edge, and an end cutting edge that connects the primary main cutting edge and the secondary main cutting edge.

EP-B-580591 shows another milling tool that is formed for cutting rough machining by the milling of slots. The milling tool comprises a plurality of segments each one of which comprises a plurality of cutting blades arranged one after the other. The segments are different and formed for rough machining, semi-fine machining and final machining. EP-B-580591 discloses cutting blades for rough machining. Each such cutting blade comprises an under side, an opposite upper side forming a chip surface, and an edge side between the upper side and the under side. A centre axis extends through the under side and the upper side. A cutting edge extends between the edge side and the chip surface and is partly formed to be in engagement with the workpiece. The cutting edge comprises a relatively short primary main cutting edge, a relatively short secondary main cutting edge, which converge toward each other, and a relatively long end edge that connects the primary main cutting edge and the secondary main cutting edge. The end edge may have different designs with a curvature. These designs of the end edge have the purpose of affecting the chip removal and the strength of the cutting blade.

US-A-5,593,254 shows a milling insert of a milling tool for the milling of slots. The milling insert comprises an under side, an opposite upper side forming a chip surface and extending parallel to an extension plane, and an edge side between the upper side and the under side. A centre axis extends through the under side and the upper side perpendicular to the extension plane. A cutting edge extends between the edge side and the chip surface and is formed to be in engagement with the workpiece during milling. The cutting edge comprises a primary main cutting edge, a secondary main cutting edge, and an end cutting edge that connects the primary main cutting edge and the secondary main cutting edge.

### SUMMARY OF THE INVENTION

The object of the present invention is to obviate the problems discussed above and to provide an improved milling insert that in itself allows a final machining of the gash and primarily the bottom of the gash of external and internal gearwheels, splines and similar workpieces. Furthermore, a milling insert is aimed at that in many cases allows a final machining entirely without the need of a subsequent machining. Such a subsequent machining is otherwise made in another machine and in another set-up of the workpiece and is preceded by a measurement of the workpiece in the new set-up.

This object is achieved by the initially indicated milling insert that is characterized in that the end cutting edge is curved from the primary transition point to the secondary transition point.

Such a design of the end cutting edge means that the same has a curvature from the primary transition point to the secondary transition point. The radius of curvature of said curvature may vary along the end cutting edge. For instance, the radius of curvature of a section of the end cutting edge may be negative or positive.

By such an end cutting edge, final machining of the root or bottom of a gash is allowed in a single working step, i.e., the gash can obtain its final shape without further machining. Thus, in relation to prior art, the manufacture can be made in a cost-wise more favourable way when subsequent machining steps in certain cases can be entirely omitted. In many cases where very high accuracy is required and where the requirements of the bottom of the gash are extremely high, the final shape can be achieved by a little finishing, which means that the subsequent machining step, for instance grinding, is less extensive than with prior art, since the tooth shape that is provided by the milling insert according to the invention is very near the final shape of the gearwheel, etc., to be provided. Also in such cases, this invention entails a saving in costs.

The milling can be carried out by a milling tool comprising a plurality of such identical milling inserts arranged one after the other. If the radius of curvature is positive, the end cutting edge has a convex shape, which is suitable for the final machining of internal gearwheels and splines. If the radius of curvature is negative, the end cutting edge has a concave shape, which is suitable for the final machining of external gearwheels and splines.

According to one embodiment of the invention, the milling insert is formed so that a tangent of the end cutting edge and a tangent of the primary main cutting edge are parallel and coincide with each other at the primary transition point, and that a tangent of the end cutting edge and a tangent of the secondary main cutting edge are parallel and coincide with each other at the secondary transition point. By such a design of the transition between the main cutting edges and the end cutting edge, it is guaranteed that the bottom surface of the gash, particularly where the same borders on the flank surface of the teeth, in many cases can be provided in a single machining step and without the formation of discontinuous transitions in the surface between the bottom of the gash and the flanks of the teeth. Such transitions would otherwise act as stress concentrations in the area important for the tooth strength. In those cases where the requirements of this part of the gash are extremely high, the final shape can be achieved by a little finishing. Also in such cases, this invention entails a saving in costs.

According to a further embodiment of the invention, the end cutting edge has at least one first radius. In order to provide a final machining, the end cutting edge should be curved along its entire length. The radius may, however, vary according to the desired shape of the bottom surface of the gash.

According to a further embodiment of the invention, the first radius is constant in respect of the end cutting edge from the primary transition point to the secondary transition point. Such an end cutting edge may be utilized for the milling of the bottom surface of the gash of both external and internal teeth.

According to a further embodiment of the invention, the end cutting edge has a second radius in respect of a first section, which extends from the primary transition point to a central section of the end cutting edge, and in respect of a second section, which extends from the secondary transition point to the central section. Such a design of the end cutting edge is advantageous for the desired shaping of the transition between the bottom surface and flank surface of the gash. Advantageously, the second radius may have an absolute value that is smaller than an absolute value of the first radius.

According to a further embodiment of the invention, the central section is concave. Such a design is suitable for the milling of the bottom surface of external teeth. Advantageously, the central section has a constant radius of curvature that is equal to the first radius.

According to a further embodiment of the invention, the central section is convex. Such a design is suitable for the milling of the bottom surface of internal teeth. Advantageously, the central section has a constant radius of curvature that is equal to the first radius.

According to a further embodiment of the invention, the first section borders on the central section at a first transition point and the second section on the central section at a second transition point, a tangent of the first section and a tangent of the central section being parallel to and coinciding with each other at the first transition point, and a tangent of the second section and a tangent of the central section being parallel to and coinciding with each other at the second transition point. Such a design contributes also to allowing the bottom surface of the gash, particularly where the same borders on the flank surface of the teeth, in many cases to be provided in a single machining step and without the formation of discontinuous transitions in the surface between the bottom of the gash and the flanks of the teeth. In those cases where the requirements of this part of the gash are extremely high, the final shape can be achieved by a little finishing. Also in such cases, this invention entails a saving in costs.

According to a further embodiment of the invention, the primary main cutting edge and the secondary main cutting edge converge toward each other up to the end cutting edge. Advantageously, the main cutting edges converge along their entire length.

According to a further embodiment of the invention, the longitudinal axis forms an angle of convergence with each one of the primary main cutting edge and the secondary main cutting edge, the angle of convergence being in the interval of 15-45°. For instance, the angle of convergence may be in the interval of 15-32°, which is advantageous particularly for the use of the milling insert in a hob tool.

According to a further embodiment of the invention, the primary main cutting edge and the secondary main cutting edge are symmetrical in respect of the longitudinal axis.

According to a further embodiment of the invention, each one of the primary main cutting edge and the secondary main cutting edge is longer than the end cutting edge. In such a manner, it is guaranteed that the primary main cutting edge and the secondary main cutting edge can mill the entire flank surface of the two teeth that are machined by the milling insert, and that the milling insert also reaches up to machine the bottom surface of the gash between said two teeth.

According to a further embodiment of the invention, the primary main cutting edge comprises an outer edge deflection that extends up to the primary transition point and the secondary main cutting edge an outer edge deflection that extends up to the secondary transition point. Such outer edge deflections allow so-called protuberance cutting, i.e., a deeper or wider cutout between the bottom surface and flank surface of the gash. By means of such protuberance cutting, it is possible to provide a grinding allowance on the flank surfaces of the teeth in those cases when the flank surfaces have to be ground.

According to a further embodiment of the invention, the under side comprises a longitudinal groove that extends parallel to the longitudinal axis. Such a groove in the under side may constitute a reference of finishing, for instance grinding, of the milling insert in the manufacture of the same. Thereby, improved tolerances of the milling insert are achieved. Suitably, the longitudinal groove is machined, for instance ground, before the other surfaces of the milling insert are finished. Such a groove also contributes to improving location of the milling insert in a correct position in a tool body. Thereby, the tolerances of the complete milling tool are improved. Advantageously, the under side may also comprise a transverse groove that extends transversely to the longitudinal groove, preferably perpendicular to the longitudinal groove. Also such a transverse groove contributes to improvements in the finishing of the milling insert and of the tolerances of the complete milling tool, particularly that the end cutting edge obtains a correct position in respect of the distance to the rotation axis of the milling tool.

According to a further embodiment of the invention, the edge side comprises a first edge surface and a second edge surface, which borders on the cutting edge and is off-plane from, i.e., is on another level than, the first edge surface. Such a second edge surface forms a shelf or elevation on the edge side or the clearance face of the milling insert. Said second edge surface contributes to a simplification of the manufacture of the milling insert since it decreases the quantity of material to be ground away when the milling insert is manufactured. Said second edge surface, which is closest to the cutting edge, is more critical than the first edge surface and should be ground so that a good tolerance is achieved.

According to a further embodiment of the invention, the upper side comprises a peripheral chip surface, which borders on the cutting edge, and a central chip surface, which is situated inside the peripheral chip surface and is off-plane from, i.e., is on another level than, the peripheral chip surface. Such a peripheral chip surface forms a shelf or elevation on the upper side or the chip surface of the milling insert. This peripheral chip surface contributes to a simplification of the manufacture of the milling insert since it decreases the quantity of material to be ground away when the milling insert is manufactured. This peripheral chip surface, which is closest to the cutting edge, is more critical than the central chip surface and should be ground so that a good tolerance is achieved.

According to a further embodiment of the invention, the chip surface comprises chip-forming means that are formed to bend and break chips formed during said milling.

According to a further embodiment of the invention, the primary main cutting edge extends between the primary transition point and a primary end point and comprises an inner edge deflection, which is arranged remotely from the primary transition point and extends up to the primary end point, and wherein the secondary main cutting edge extends between the secondary transition point and a secondary end point and comprises an inner edge deflection, which is arranged remotely from the secondary transition point and extends up to the secondary end point. By means of such inner edge deflections, an accurate milling and machining is allowed of the outer areas of the flank surfaces of the teeth being manufactured.

According to a further embodiment of the invention, the milling insert comprises an additional cutting edge, which extends between the edge side and the chip surface, the additional cutting edge comprising a primary main cutting edge, which is formed to be in engagement with the workpiece during said milling, a secondary main cutting edge, which is formed to be in engagement with the workpiece during said milling, the primary main cutting edge and the secondary main cutting edge being symmetrical in respect of the longitudinal axis, and an end cutting edge, which is formed to be in engagement with the workpiece during said milling, the end cutting edge connecting the primary main cutting edge and the secondary main cutting edge and bordering on the primary main cutting edge at a primary transition point and on the secondary main cutting edge at a secondary transition point, the end cutting edge being curved from the primary transition point to the secondary transition point, a normal to the extension plane forming an acute clearance angle with the edge side along the additional cutting edge, and the cutting edge and the additional cutting edge extending in opposite directions from the centre axis in such a way that the milling insert is indexable by rotation on the centre axis between a first position where the cutting edge is in engagement with the workpiece and a second position where the additional cutting edge is in engagement with the workpiece.

The object is also achieved by the initially indicated milling tool, which is formed to rotate on a rotation axis and which comprises a tool body and a plurality of milling inserts according to the above, which are mounted on the tool body. Advantageously, the longitudinal axis of each milling insert may intersect the rotation axis of the tool. Furthermore, the tool body may advantageously comprise a seat for each milling insert, the seat having a first support surface with a ridge that co-operates with a longitudinal groove of the under side of the milling insert.

### BRIEF DESCRIPTION OF THE DRAWINGS

The invention will now be explained in more detail by a description of different embodiments, reference being made to the appended drawings.
- Fig. 1: shows a perspective view of a milling tool comprising a plurality of milling inserts.
- Fig. 2: shows a view from the front of the milling tool in Fig. 1.
- Fig. 3: shows a perspective view of another milling tool comprising a plurality of milling inserts.
- Fig. 4: shows a view from the front of the milling tool in Fig. 3.
- Fig. 5: shows a view from the side of the milling tool in Fig. 3.
- Fig. 6A: shows a perspective view of a milling insert according to a first embodiment of the invention.
- Fig. 6B: shows a view from above of the milling insert in Fig. 6A.
- Fig. 6C: shows a view from the front of the milling insert in Fig. 6A.
- Fig. 6D: shows a view from the side of the milling insert in Fig. 6A.
- Fig. 6E: shows a view from below of the milling insert in Fig. 6A.
- Fig. 6F: shows a section view through a workpiece that has been machined by the milling insert in Fig. 6A.
- Fig. 7A: shows a perspective view of a milling insert according to a second embodiment of the invention.
- Fig. 7B: shows a view from above of the milling insert in Fig. 7A.
- Fig. 7C: shows a view from the front of the milling insert in Fig. 7A.
- Fig. 7D: shows a view from the side of the milling insert in Fig. 7A.
- Fig. 7E: shows a view from below of the milling insert in Fig. 7A.
- Fig. 7F: shows a section view through a workpiece that has been machined by the milling insert in Fig. 7A.
- Fig. 7G: shows a view from above of a front part of the milling insert in Fig. 7A.
- Figs. 8A-8G: show seven different views corresponding to Figs. 7A-7G but in respect of a milling insert according to a third embodiment of the invention.
- Figs. 9A-9G: show seven different views corresponding to Figs. 7A-7G but in respect of a milling insert according to a fourth embodiment of the invention.
- Figs. 10A-10G: show seven different views corresponding to Figs. 7A-7G but in respect of a milling insert according to a fifth embodiment of the invention.
- Fig. 11: shows a view from above of a variant of the milling insert according to the second embodiment.
- Fig. 12: shows a view from above of a variant of the milling insert according to the fourth embodiment.
- Fig. 13A: shows a perspective view of a milling insert according to a sixth embodiment of the invention.
- Fig. 13B: shows a view from above of the milling insert in Fig. 13A.
- Fig. 13C: shows a view from the front of the milling insert in Fig. 13A.
- Fig. 13D: shows a perspective view of the milling insert in Fig. 13A in engagement with a workpiece.
- Fig. 13E: shows a planar view of the milling insert in Fig. 13A in engagement with the workpiece.

### DETAILED DESCRIPTION OF DIFFERENT EMBODIMENTS

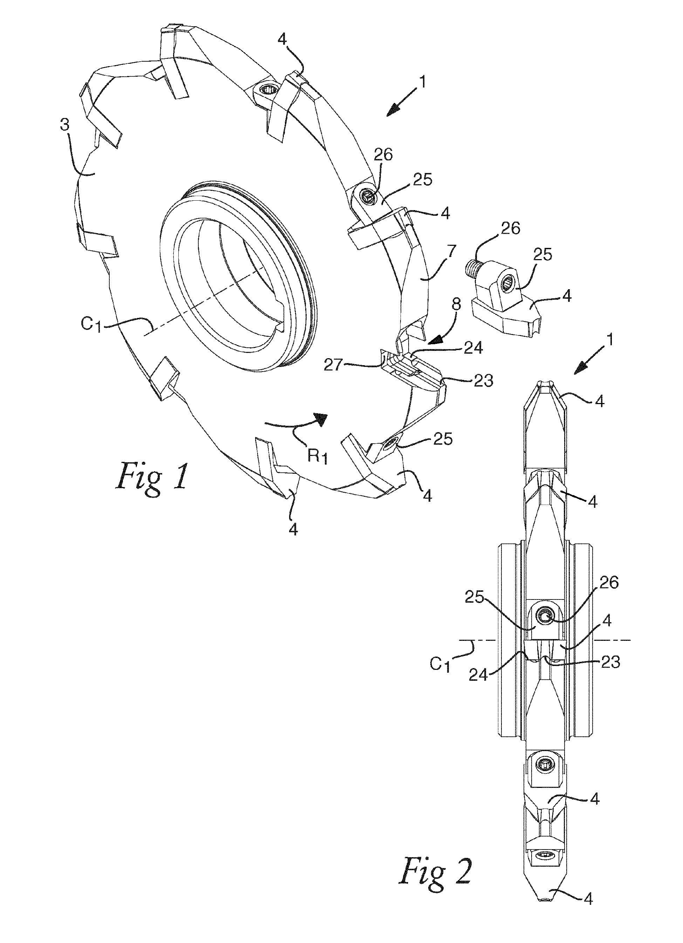

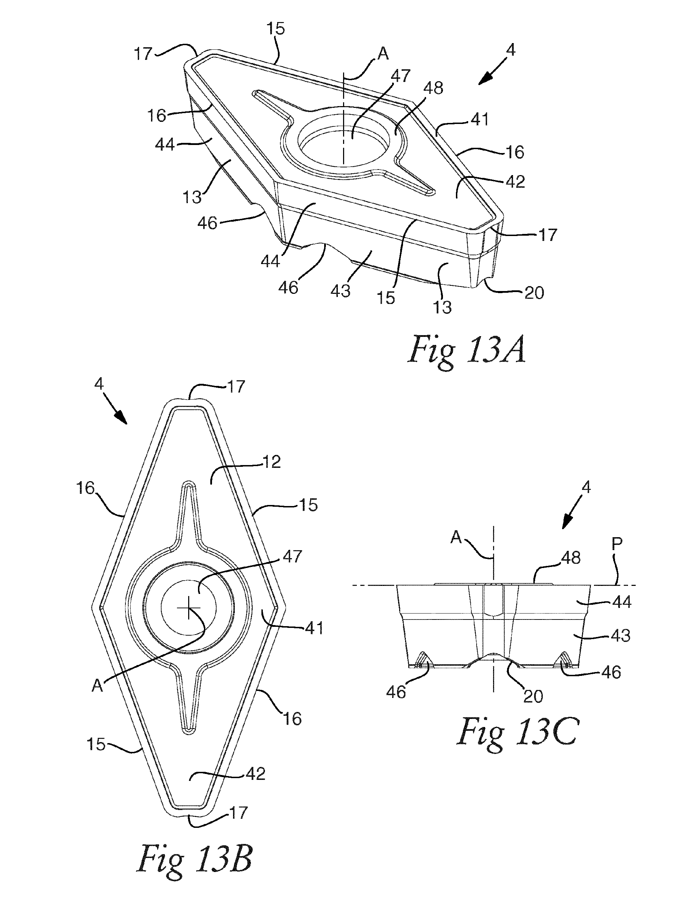

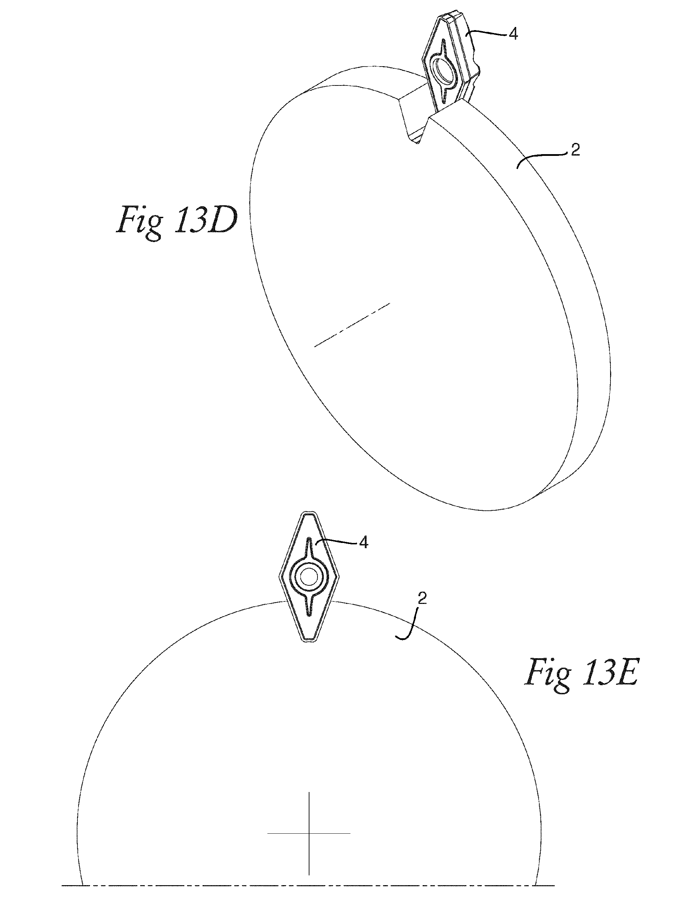

Figs. 1 and 2 show a milling tool 1 formed for the milling of slots in a workpiece 2, see Figs. 13D and 13E, for instance tooth slots of internal and external gearwheels and spline joints, and also of racks, impellers of hydraulic pumps, and similar toothed elements. The workpiece 2 may be fixed in a workpiece spindle (not shown). The milling tool 1, shown in Figs. 1 and 2, is a so-called slot cutter and comprises a tool body 3, which may be manufactured from steel, and a large number of replaceable milling inserts 4. The tool body 2 defines a rotation axis C₁ on which the milling tool 1 rotates in a direction of rotation R₁.

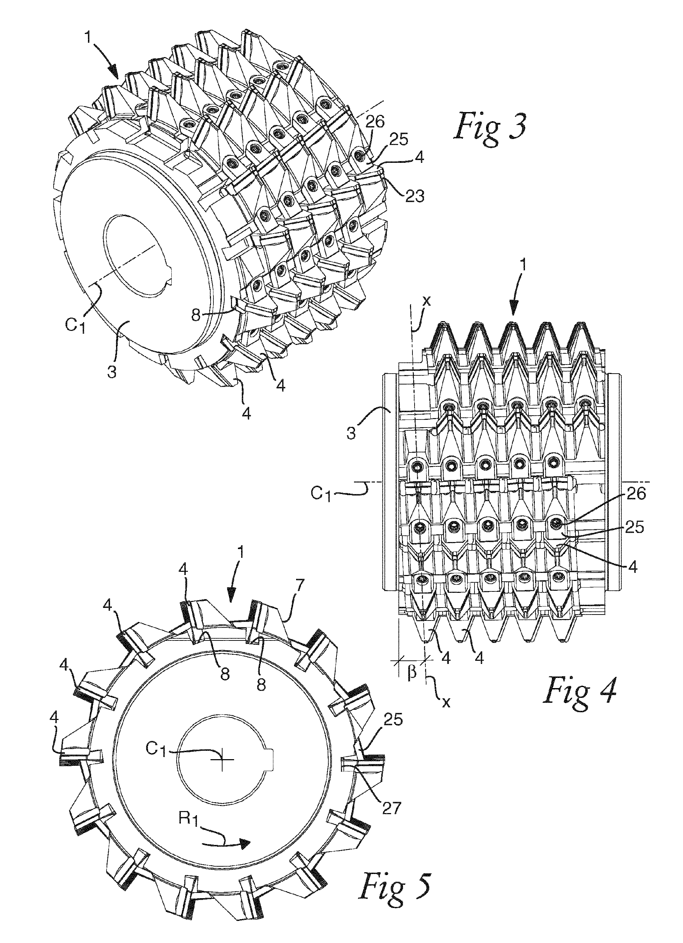

Figs. 3-5 shows another milling tool 1 formed for the milling of slots in a workpiece 2, for instance tooth slots of internal and external gearwheels and spline joints, and also of racks, impellers of hydraulic pumps, and similar toothed elements. The workpiece 2 may be fixed in a workpiece spindle (not shown). The milling tool 1, shown in Figs. 3-5, is a so-called hob tool and comprises a tool body 3, which may be manufactured from steel, and a large number of replaceable milling inserts 4. The tool body 3 defines a rotation axis C₁ on which the milling tool 1 rotates in a direction of rotation R₁.

The tool body 3 of the milling tools 1 in Figs. 1-5 has a peripheral surface 7 that extends around the rotation axis C₁ and comprises a large number of separated seats 8, which are arranged at the peripheral surface 7. Each seat 8 is formed to receive one of the milling inserts 4.

The seats 8, and the milling inserts 4, are arranged one after the other along a line x. In the milling tool 1 shown in Figs. 1 and 2, the line x is lying in a plane perpendicular to the rotation axis C₁. In the milling tool 1 that shown in Figs. 3-5 and that is a hob tool, the milling inserts 4 are placed in the tool body 3 along the line x. The line x is helically shaped and has a constant pitch having a pitch angle β in relation to a plane perpendicular to the rotation axis C₁. The pitch angle β may be 1-10°.

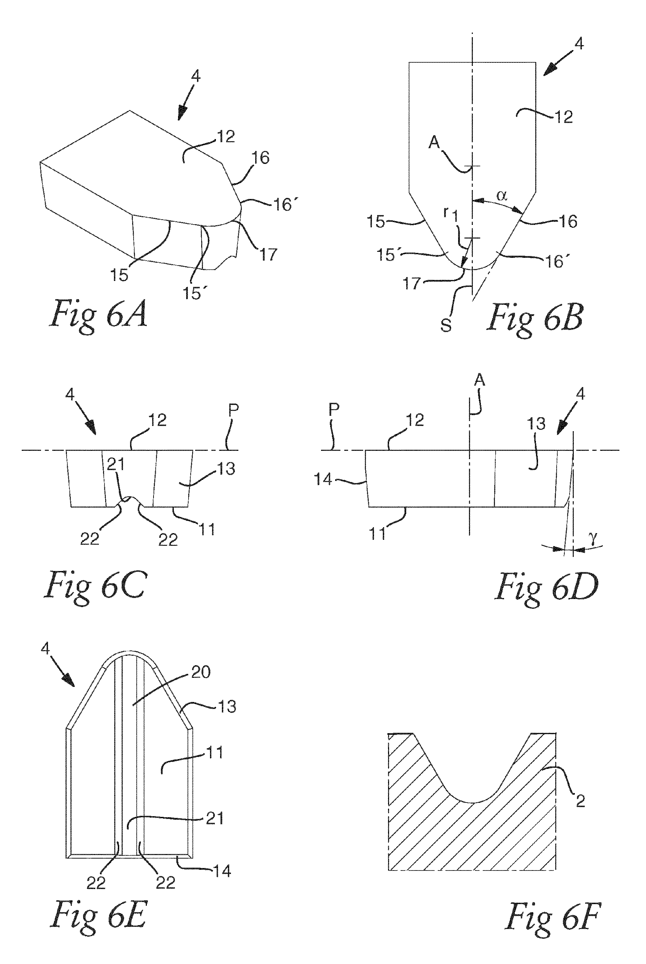

Different embodiments of the milling inserts 4 will now be described in more detail, reference being made to Figs. 6A-13E. It should be noted that all milling inserts 4 of the milling tool 1 may be identical but it is also possible to utilize different milling inserts 4 in different positions in the milling tool 1. The milling inserts 4 are manufactured from a harder material than the tool body 3, for instance from cemented carbide.

With reference to Figs. 6A-6F, a first embodiment is shown of a milling insert 4 that comprises an under side 11, an opposite upper side 12 forming a chip surface and extending parallel to an extension plane P, and an edge side 13 extending between the upper side 12 and the under side 11. A centre axis A extends through the under side 11 and the upper side 12 perpendicular to the extension plane P. A longitudinal axis S is perpendicular to and intersects the centre axis A. The milling insert 4 according to the first embodiment also has a back side 14 between the upper side 12 and the under side 11. The back side 14 extends perpendicular to the longitudinal axis S, at least in the extension plane P, or on a level with the extension plane P.

The milling insert 4 also comprises a cutting edge, which extends between the edge side 13 and the chip surface, i.e., the upper side 12. The cutting edge comprises a primary main cutting edge 15, a secondary main cutting edge 16, and an end cutting edge 17.

The milling insert 4 has a positive cutting geometry, which means that a normal to the extension plane P forms an acute clearance angle γ with the edge side 13 along the cutting edge, i.e., along the primary main cutting edge 15, the secondary main cutting edge 16, and the end cutting edge 17. The clearance angle γ may be equal along the entire cutting edge but it may also vary and be different along the primary main cutting edge 15, the secondary main cutting edge 16, and/or the end cutting edge 17. Advantageously, the longitudinal axis S of each milling insert 4 of the tool body 3 shown in Figs. 1-2 and of the tool body 3 shown in Figs. 3-5 intersects the rotation axis C₁, or in other words, the extension plane P of the chip surface of each milling insert 4 extends radially outward in respect of the rotation axis C₁.

The primary main cutting edge 15 and the secondary main cutting edge 16 are both formed to be in engagement with the workpiece 2 during the milling. The primary and secondary main cutting edges 15 and 16 are intended to mill flank surfaces of teeth to be manufactured.

In the embodiments shown, the primary main cutting edge 15 and the secondary main cutting edge 16 are symmetrical in respect of the longitudinal axis S, which in these embodiments forms a symmetry line. The primary main cutting edge 15 and the secondary main cutting edge 16 converge toward each other up to the end cutting edge 17. In the embodiments shown, the primary main cutting edge 15 and the secondary main cutting edge 16 converge along the entire respective main cutting edge toward the end cutting edge 17. The longitudinal axis S forms an angle of convergence α with each one of the primary main cutting edge 15 and the secondary main cutting edge 16. In the embodiments shown, particularly in respect of the milling inserts 4 of the hob tool shown in Figs. 3-5, the angle of convergence α is in the interval of 15-32°. The angle of convergence α does however not need to be constant along the entire primary and secondary main cutting edges 15, 16 but may vary. For instance, the primary and secondary main cutting edges 15, 16 may be concave or convex.

Furthermore, it should be noted that the angle of convergence α may assume other values than those given above and be in an interval from 15-45° depending on the application. For the milling of splines or spline joints, the angle of convergence α may be in the interval of 30-45°and for instance, according to standard, be 30, 37,5, or 45°. For gear milling, the above-mentioned interval of 15-32°, particularly 18-32°, may be suitable.

It should also be noted that the primary main cutting edge 15 and the secondary main cutting edge 16 do not need to be symmetrical in respect of the longitudinal axis S. For instance, the angle of convergence α of the primary main cutting edge 15 may differ from the angle of convergence α of the secondary main cutting edge 16, preferably by a small amount. Such asymmetrical milling inserts may, for instance, be utilized when it is desired to optimize, for instance in gearwheels, for a dominating loading direction.

In the embodiments shown, each one of the primary main cutting edge 15 and the secondary main cutting edge 16 is longer, or considerably longer, than the end cutting edge 17.

The end cutting edge 17 is also formed to be in engagement with the workpiece 2 during the milling. The end cutting edge 17 is formed to provide the final shape of the bottom surface in the gash between two adjacent teeth of the workpiece 2. The end cutting edge 17 connects the primary main cutting edge 15 and the secondary main cutting edge 16. The end cutting edge 17 borders on the primary main cutting edge 15 at a primary transition point 15' and on the secondary main cutting edge 16 at a secondary transition point 16'.

As may be particularly seen in Figs. 6C and 6E, the under side 11 of the milling insert 4 comprises a longitudinal groove 20 that extends parallel to the longitudinal axis S. The longitudinal groove 20 has a radial, or essentially radial, extension when the milling insert 4 is mounted in the milling tool 1, i.e., in respect of the rotation axis C₁. The first longitudinal groove 20 comprises a bottom surface 21 and two side surfaces 22. The side surfaces 22 connect the bottom surface 21 with the under side 11.

The bottom surface 21 and the side surfaces 22 are formed to co-operate with the corresponding surfaces of a ridge 23 that extends upward from a first support surface 24 of the seat 8 in the tool body 3, see Figs. 2 and 3, when the milling insert 4 is mounted in the tool body 3. The side surfaces 22 form an angle with each other. This angle is identical or equal to an angle of the corresponding side surfaces of the ridge 23. Thus, when the milling insert 4 is mounted in the seat 8, the elongate groove 20 and the ridge 23 are in engagement with each other. In that connection, the side surfaces 22 are abutting against the corresponding side surfaces of the ridge 23. There may be a gap between the bottom surface 21 and the corresponding upper surface of the ridge 23.

Each milling insert 4 according to the first embodiment is mounted in the seat 8 by means of a wedge 25 that is pressed inward, approximately radially inward by means of a fixing screw 26, see Figs. 2 and 3. When the wedge 25 is displaced inward, it will press the milling insert 4 downward toward the first support surface 24 and the ridge 23 and simultaneously inward toward a second support surface 27, in such a way that the back side 14 abuts against the second support surface 27. When the milling insert 4 is mounted in the seat 8, the extension plane P of the upper side 12 or chip surface of the milling insert 4 will extend radially outward in respect of the rotation axis C₁ of the milling tool 1.

As may be seen in Figs. 6A-6B, the end cutting edge 17 is curved from the primary transition point 15' to the secondary transition point 16'. By the milling tool 1 shown in Figs. 1 and 2, the milling insert 4 according to the first embodiment will, in the workpiece 2, provide a slot having the cross-section shown in Fig. 6F. Here, the bottom surface of the slot corresponds to the shape of the end cutting edge 17.

In the first embodiment, the end cutting edge 17 has at least one first radius r₁, and more precisely the first radius r₁ is constant in respect of the end cutting edge 17 from the primary transition point 15' to the secondary transition point 16'.

Advantageously, a tangent of the end cutting edge 17 and a tangent of the primary main cutting edge 15 coincide with each other at the primary transition point 15'. Likewise, a tangent of the end cutting edge 17 and a tangent of the secondary main cutting edge 16 may advantageously coincide with each other at the secondary transition point 16'. In such a manner, a smooth transition is obtained between the end cutting edge 17 and the respective main cutting edge 15 and 16, which decreases the risk of breakage of or damage to the milling insert 4 and which guarantees a favourable cross-sectional shape of the slot to be milled.

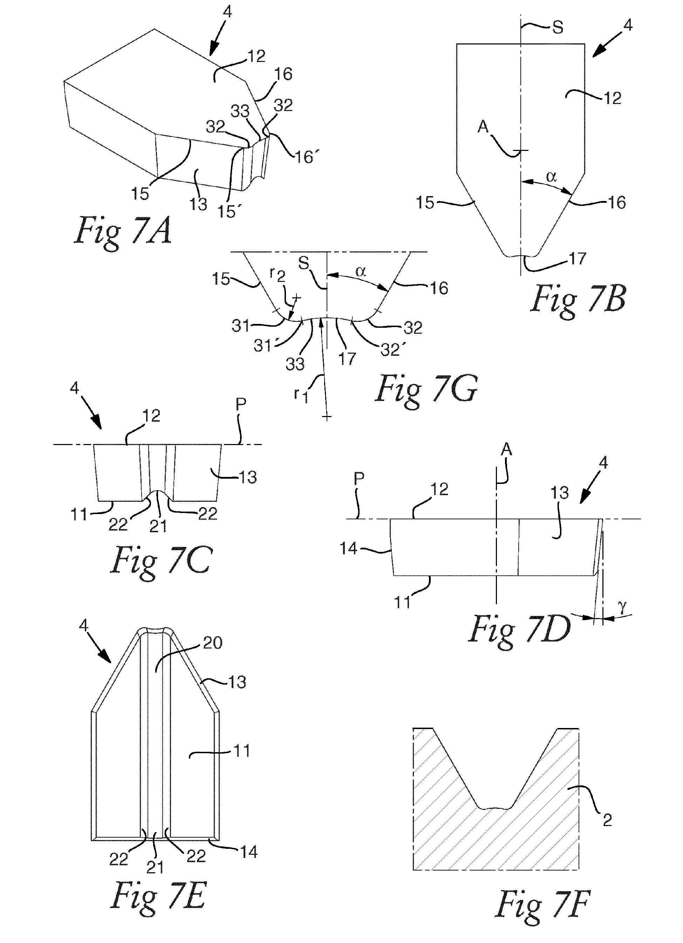

With reference to Figs. 7A-7G, a second embodiment of a milling insert 4 is shown. The second embodiment differs from the first embodiment in respect of the end cutting edge 17. According to the second embodiment, the end cutting edge 17 comprises a first section 31, a second section 32, and a central section 33 that is arranged between and borders on the first section 31 and the second section 32. Thus, the first section 31 extends from the primary transition point 15' to the central section 33 and borders on the central section 33 at a first transition point 31'. The second section 32 extends from the secondary transition point 16' to the central section 33 and borders on the central section 33 at a second transition point 32'.

The end cutting edge 17 has a second radius r₂ in respect of the first section 31 and in respect of the second section 32. As also is seen in particularly Fig. 7G, the second radius r₂ has an absolute value that is smaller than an absolute value of the first radius r₁. In the second embodiment, the first radius r₁ and the second radius r₂ have different direction and the central section 33 is concave.

Advantageously, a tangent of the first section 31 and a tangent of the central section 33 coincide with each other at the first transition point 31'. Likewise, a tangent of the second section 32 and a tangent of the central section 33 may advantageously coincide with each other at the second transition point 32'. In such a manner, smooth transitions is provided also here between the central section 33 and the first section 31 and the second section 32, respectively, which decreases the risk of breakage of or damage to the milling insert 4 and guarantees a favourable cross-sectional shape of the slot to be milled.

By the milling tool 1 shown in Figs. 1 and 2, the milling insert 4 according to the second embodiment will, in the workpiece 2, provide a slot having the cross-section shown in Fig. 7F. Also here, the bottom surface of the slot corresponds to the shape of the end cutting edge 17. This shape of the end cutting edge 17 is particularly suitable for the milling of tooth gaps of external gearwheels and similar workpieces. Particularly, the bottom surfaces of, for instance, a gearwheel having external teeth may be concentric and a part of one and the same circle that has the same radius as the first radius r₁ of the central section 33.

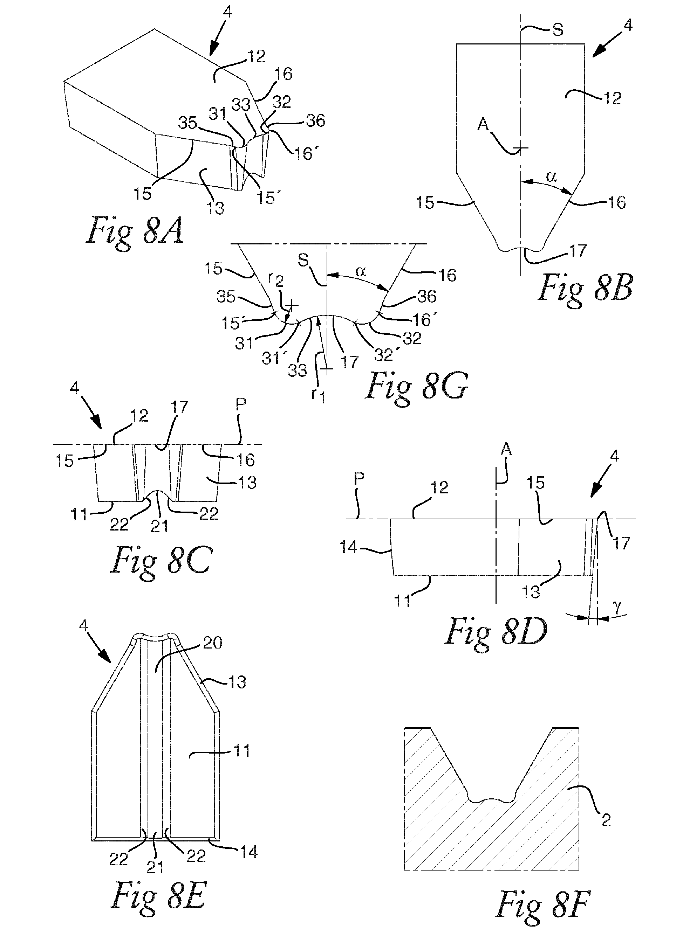

With reference to Figs. 8A-8G, a third embodiment of a milling insert 4 is shown. The third embodiment differs from the second embodiment in that the primary main cutting edge 15 and the secondary main cutting edge 16 comprise a respective outer edge deflection 35 and 36. The outer edge deflection 35 of the primary main cutting edge 15 extends up to the primary transition point 15'. The outer edge deflection 36 of the secondary main cutting edge 16 extends up to the secondary transition point 16'. The outer edge deflections 35 and 36 allow protuberance cutting, i.e., a deeper or wider cutout between the bottom surface and flank surface of the gash. By means of such protuberance cutting, it is possible to provide a grinding allowance on the flank surfaces of the teeth in those cases when the flank surfaces are to be ground.

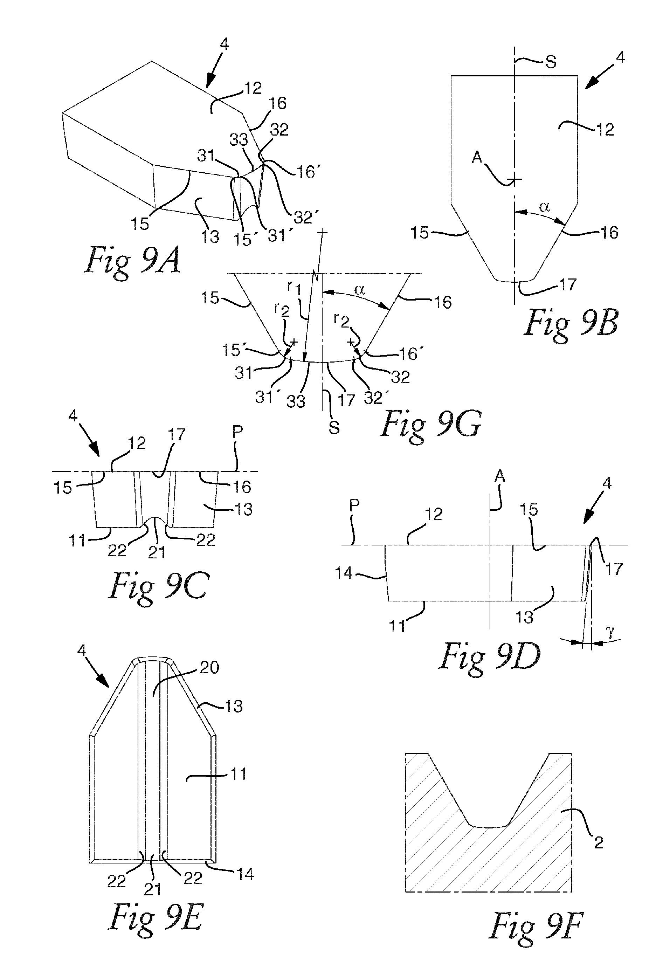

With reference to Figs. 9A-9G, a fourth embodiment of a milling insert 4 is shown. The fourth embodiment differs from the second embodiment in respect of the central section 33 of the end cutting edge 17. In the fourth embodiment, this central section 33 is convex. Also in this case, the second radius r₂ is smaller than the first radius r₁. In a milling tool of the type shown in Figs. 1 and 2, the milling insert 4 according to the fourth embodiment will, in the workpiece 2, provide a slot having the cross-section shown in Fig. 9F. This milling insert 4 is particularly suitable for the milling of internal tooth gaps.

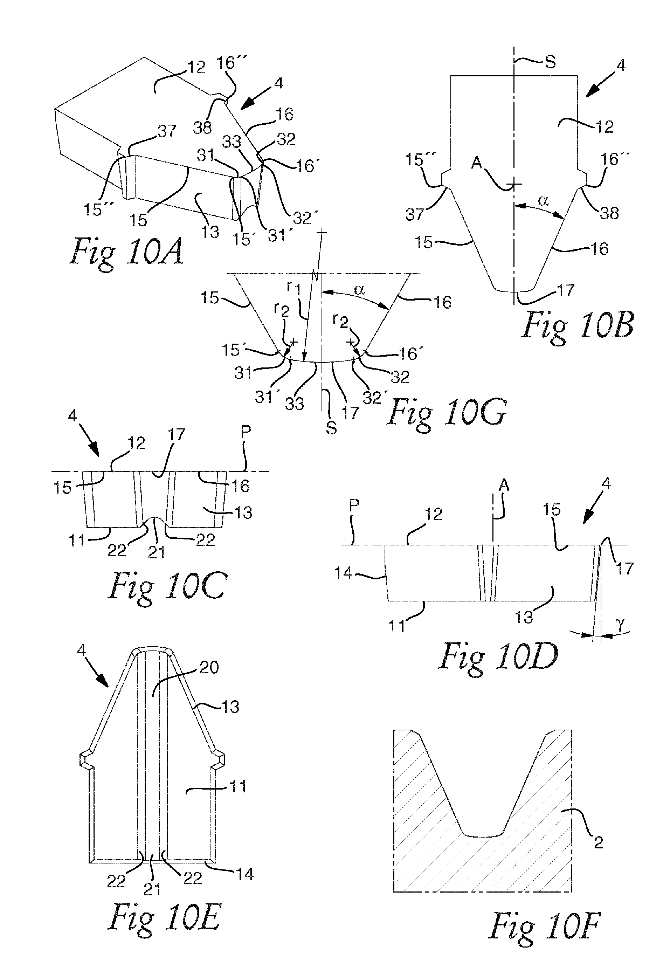

With reference to Figs. 10A-10G, a fifth embodiment of a milling insert 4 is shown. The fifth embodiment differs from the fourth embodiment in that the primary main cutting edge 15 and the secondary main cutting edge 16 comprise a respective inner edge deflection 37 and 38. The primary main cutting edge 15 extends between the primary transition point 15' and a primary end point 15". The secondary main cutting edge 16 extends between the secondary transition point 16' and a secondary end point 16". The inner edge deflection 37 of the primary cutting edge 15 is arranged at a great distance from the primary transition point 15' and extends up to the primary end point 15". Correspondingly, the inner edge deflection 38 of the secondary main cutting edge 16 is arranged at a great distance from the secondary transition point 16' and extends up to the secondary end point 16". The inner edge deflections 37 and 38 allow an accurate milling and machining of the outer areas of the flank surfaces of the teeth to be manufactured, see Fig. 10F wherein the upper areas of the flank surfaces are chamfered.

The fifth embodiment concerns an end cutting edge 17 similar to the one of the fourth embodiment in Figs. 9A-9G. Here, it should however be noted that inner edge deflections 37 and 38 also may be arranged in the milling inserts 4 that are intended in the first, second, and third embodiments.

Likewise, it may here be observed that the outer edge deflections 35 and 36 that are shown for the third embodiment also may be applied to milling inserts 4 according to the fourth and fifth embodiment having a convex central section 33 of the end cutting edge 17. Such outer edge deflections 35 and 36 may also be applied to the end cutting edge 17 shown for the first embodiment in Figs. 6A-6F.

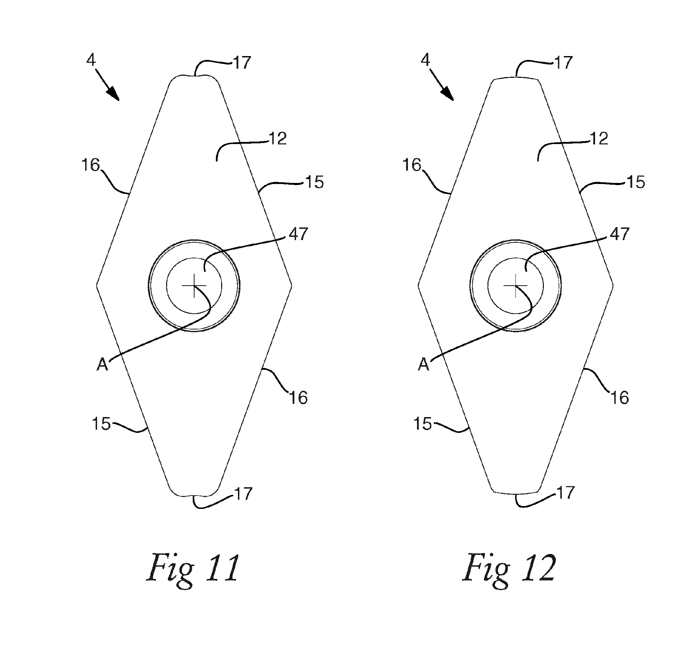

Fig. 11 shows a variant of the second embodiment that differs from the same only in that the milling insert 4 has been formed as an indexable milling insert 4 having two diametrically separated cutting edges. The milling insert 4 can be indexed by rotation 180° on the centre axis A.

Fig. 12 correspondingly shows an indexable milling insert 4 of the fourth embodiment shown Figs. 9A-9G. Also this same variant is indexable by rotation 180° on the centre axis A. It should be noted that also the milling insert 4 according to the first embodiment, the third embodiment and the fifth embodiment may be formed as indexable milling inserts having two cutting edges facing each a direction.

With reference to Figs. 13A-13E, there is shown a milling insert 4 according to a sixth embodiment that differs from the variant of the second embodiment shown in Fig. 12 in that the upper side 12 comprises an elevated peripheral chip surface 41, which borders on the cutting edge, and a central chip surface 42, which is situated inside the peripheral chip surface 41 and is off-plane from the peripheral chip surface 41. More precisely, the central chip surface 42 is on a lower level than the peripheral chip surface 41. Such a peripheral chip surface 42, called grinding shelf, simplifies the manufacture of the milling insert 4 by the fact that, in the finishing and the final grinding of the milling insert, as much material does not have to be machined away but only a layer of the peripheral chip surface 41.

Furthermore, the milling insert 4 according to the sixth embodiment has a first edge surface 43 and an elevated second edge surface 44, which borders on the cutting edge and is off-plane from the first edge surface 43. Also such a second edge surface 44, called grinding shelf, of the edge side 13 simplifies the manufacture of the milling insert 4 since only the second edge surface 44 needs to be ground in connection with the final finishing of the milling insert 4.

The milling insert 4 according to the sixth embodiment is formed in the indexable variant, compare Figs. 11 and 12. It should be noted that a design with an elevated peripheral chip surface 41 and/or an elevated second edge surface 44 also may be utilized for milling inserts 4 that are not indexable. Likewise, the milling insert 4 according to the sixth embodiment may also be provided with end cutting edges 17 according to the first and fourth embodiment. Furthermore, the milling insert 4 according to the sixth embodiment may be provided with inner edge deflections 37, 38 and/or outer edge deflections 35, 36.

The indexable milling insert 4 according to the sixth embodiment has also, in addition to the longitudinal groove 20, two transverse grooves 46 that extend transversely to the longitudinal groove 20. The transverse grooves 46 are formed to co-operate with corresponding transverse laths (not shown) of the first support surface 24 of the seat 8.

Here, it should be noted that the indexable milling inserts 4 have been shown with a central fastening hole 47 for the fastening of the milling inserts 4 by means of a fixing screw that extends through the fastening hole 47 and into a threaded hole in the first support surface 24 of the seat in the tool body 3.

Furthermore, it should be noted that the sixth embodiment shows an example of centrally arranged chip-forming means 48 in the form of an elevation from the upper side 12, or in this case from the central chip surface 42. It should be noted that the milling inserts 4 according to all other embodiments naturally also may be provided with chip-forming means when desired.

The milling inserts 4 according to the embodiments shown can also be utilized in milling tools 1 according to Figs. 3-5. Then, the milled slots will obtain a shape that does not directly correspond to the shape of the milling inserts 4 as seen in the direction of the centre axis A. For instance, the flank surfaces of the slots may obtain an involute shape also with straight main cutting edges 15, 16.

The invention is not limited to the embodiments shown but may be varied and modified within the scope of the following claims.

### List of Reference Designations

- 1: milling tool
- 2: workpiece
- 3: tool body
- 4: milling insert
- 7: peripheral surface
- 8: seat
- 11: under side
- 12: upper side
- 13: edge side
- 14: back side
- 15: primary main cutting edge
- 15': primary transition point
- 16: secondary main cutting edge
- 16': secondary transition point
- 17: end cutting edge
- 20: longitudinal groove
- 21: bottom surface
- 22: side surface
- 23: ridge
- 24: first support surface
- 25: wedge
- 26: fixing screw
- 27: second support surface
- 31: first section
- 31': first transition point
- 32: second section
- 32': second transition point
- 33: central section
- 35: outer edge deflection
- 36: outer edge deflection
- 37: inner edge deflection
- 38: inner edge deflection
- 41: peripheral chip surface
- 42: central chip surface
- 43: first edge surface
- 44: second edge surface
- 46: transverse groove
- 47: fastening hole
- 48: chip-forming means
- C₁: rotation axis
- R₁: direction of rotation
- A: centre axis
- S: longitudinal axis
- P: extension plane
- α: angle of convergence
- β: pitch angle
- γ: clearance angle
- r₁: first radius
- r₂: second radius

## Claims

1. Milling insert of a milling tool (1) formed for the milling of a slot in a workpiece (2), the milling insert comprising
an under side (11),
an opposite upper side (12), which forms a chip surface and extends parallel to an extension plane (P),
an edge side (13) between the upper side (12) and the under side (11),
a centre axis (A), which extends through the under side (11) and the upper side (12) perpendicular to the extension plane (P),
a longitudinal axis (S), which is perpendicular to and intersects the centre axis (A), and
a cutting edge, which extends between the edge side (13) and the chip surface, the cutting edge comprising
a primary main cutting edge (15), which is formed to be in engagement with the workpiece (2) during said milling,
a secondary main cutting edge (16), which is formed to be in engagement with the workpiece (2) during said milling, and
an end cutting edge (17), which is formed to be in engagement with the workpiece (2) during said milling, the end cutting edge (17) connecting the primary main cutting edge (15) and the secondary main cutting edge (16) and bordering on the primary main cutting edge (15) at a primary transition point (15') and on the secondary main cutting edge (16) at a secondary transition point (16'),
a normal to the extension plane (P) forming an acute clearance angle (γ) with the edge side (13) along the cutting edge, **characterized in**
**that** the end cutting edge (17) is curved from the primary transition point (15') to the secondary transition point (16').

2. Milling insert according to claim 1, wherein
a tangent of the end cutting edge (17) and a tangent of the primary main cutting edge (15) are parallel to and coincide with each other at the primary transition point (15'), and
a tangent of the end cutting edge (17) and a tangent of the secondary main cutting edge (16) are parallel to and coincide with each other at the secondary transition point (16').

3. Milling insert according to any one of claims 1 and 2, wherein the end cutting edge (17) has at least one first radius (r₁).

4. Milling insert according to claim 3, wherein the first radius (r₁) is constant in respect of the end cutting edge (17) from the primary transition point (15') to the secondary transition point (16').

5. Milling insert according to claim 3, wherein the end cutting edge has a second radius (r₂) in respect of a first section, which extends from the primary transition point to a central section of the end cutting edge, and in respect of a second section, which extends from the secondary transition point to the central section.

6. Milling insert according to claim 5, wherein the second radius (r₂) has an absolute value that is smaller than an absolute value of the first radius (r₁).

7. Milling insert according to any one of claims 5 and 6, wherein the central section (33) is concave.

8. Milling insert according to any one of claims 5 and 6, wherein the central section (33) is convex.

9. Milling insert according to any one of claims 5 to 8, wherein the first section (31) borders on the central section (33) at a first transition point (31') and the second section (32) borders on the central section (33) at a second transition point (32'),
a tangent of the first section (31) and a tangent of the central section (33) are parallel to and coinciding with each other at the first transition point (31'), and
a tangent of the second section (32) and a tangent of the central section (33) are parallel to and coinciding with each other at the second transition point (32').

10. Milling insert according to any one of the preceding claims, wherein the primary main cutting edge (15) and the secondary main cutting edge (16) converge toward each other up to the end cutting edge (17).

11. Milling insert according to claim 10, wherein the longitudinal axis (S) forms an angle of convergence (α) with each one of the primary main cutting edge (15) and the secondary main cutting edge (16), and wherein the angle of convergence (α) is in the interval of 15-45°.

12. Milling insert according to any one of the preceding claims, wherein the primary main cutting edge (15) and the secondary main cutting edge (16) are symmetrical in respect of the longitudinal axis (S).

13. Milling insert according to any one of the preceding claims, wherein each one of the primary main cutting edge (15) and the secondary main cutting edge (16) is longer than the end cutting edge (17).

14. Milling insert according to any one of the preceding claims, wherein the primary main cutting edge (15) comprises an outer edge deflection (35) that extends up to the primary transition point (15') and the secondary main cutting edge (16) comprises an outer edge deflection (36) that extends up to the secondary transition point (16').

15. Milling insert according to any one of the preceding claims, wherein the under side (11) comprises a longitudinal groove (20) that extends parallel to the longitudinal axis (S).

16. Milling insert according to claim 15, wherein the under side (11) comprises a transverse groove (46) that extends transversely to the longitudinal groove (20).

17. Milling insert according to any one of the preceding claims, wherein the edge side (13) comprises a first edge surface (43) and a second edge surface (44), which borders on the cutting edge and is off-plane from the first edge surface (43).

18. Milling insert according to any one of the preceding claims, wherein the upper side comprises a peripheral chip surface (41), which borders on the cutting edge, and a central chip surface (42), which is situated inside the peripheral chip surface (41) and is off-plane from the peripheral chip surface (41).

19. Milling insert according to any one of the preceding claims, wherein the chip surface comprises chip-forming means (48) that are formed to bend and break chips formed during said milling.

20. Milling insert according to any one of the preceding claims, wherein the primary main cutting edge (15) extends between the primary transition point (15') and a primary end point (15") and comprises an inner edge deflection (37), which is arranged remotely from the primary transition point (15') and extends up to the primary end point (15"), and wherein the secondary main cutting edge (16) extends between the secondary transition point (16') and a secondary end point (16") and comprises an inner edge deflection (38), which is arranged remotely from the secondary transition point (16') and extends up to the secondary end point (16").

21. Milling insert according to any one of the preceding claims, wherein the milling insert comprises an additional cutting edge, which extends between the edge side (13) and the chip surface, the additional cutting edge comprising
a primary main cutting edge (15), which is formed to be in engagement with the workpiece (2) during said milling,
a secondary main cutting edge (16), which is formed to be in engagement with the workpiece (2) during said milling, and
an end cutting edge (17), which is formed to be in engagement with the workpiece (2) during said milling, the end cutting edge (17) connecting the primary main cutting edge (15) and the secondary main cutting edge (16) and bordering on the primary main cutting edge (15) at a primary transition point (15') and on the secondary main cutting edge (16) at a secondary transition point (16'), the end cutting edge (17) being curved from the primary transition point (15') to the secondary transition point (16'),
a normal to the extension plane (P) forming an acute clearance angle with the edge side (13) along the additional cutting edge, and the cutting edge and the additional cutting edge extending in opposite directions from the centre axis (A) in such a way that the milling insert (4) is indexable by rotation on the centre axis (A) between a first position where the cutting edge is in engagement with the workpiece (2) and a second position where the additional cutting edge is in engagement with the workpiece (2).

22. Milling tool formed for the milling of a slot in a workpiece (2), wherein the milling tool (1) is formed to rotate on a rotation axis (C₁), and wherein the milling tool (1) comprises a tool body (3) and a plurality of milling inserts (4) according to any one of the preceding claims, which are mounted on the tool body (3).

23. Milling tool according to claim 22, wherein the longitudinal axis (S) of each milling insert (4) intersects the rotation axis (C₁).

24. Milling tool according to any one of claims 22 and 23, wherein the tool body (3) comprises a seat (8) for each milling insert (4), and wherein the seat (8) has a first support surface (24) with a ridge (23) that co-operates with a longitudinal groove (20) of the under side (11) of the milling insert (4).
